# FASCICULE DE BREVET EUROPEEN

(11) **EP 0 540 394 B1**
(45) Date de publication et mention de la délivrance du brevet: **17.09.1997**
(21) Numéro de dépôt: 92402833.5
(22) Date de dépôt: 16.10.1992
(51) Int. Cl.: G02B 27/00, G02B 23/10

(54) **Jumelle à double image**
Binokulares Fernrohr mit doppeltem Bild
Dual image binoculars

(30) Priorité: 31.10.1991 FR 9113491
(43) Date de publication de la demande: 05.05.1993
(73) Titulaire: THOMSON-CSF, 75008 Paris (FR)
(72) Inventeur: Michel, Claude, Thomson-CSF, F-92045 Paris la défense (FR); Le Pesant, Jean-Pierre, Thomson-CSF, F-92045 Paris la Défense (FR)
(74) Mandataire: Benoit, Monique

(56) Documents cités:
- EP-A- 0 204 471
- EP-A- 0 286 496
- EP-A- 0 381 449
- WO-A-84/04177
- GB-A- 406 336
- GB-A- 1 403 575
- US-A- 4 012 123
- US-A- 5 026 158
- PATENT ABSTRACTS OF JAPAN vol. 8, no. 202 (P-300)14 Septembre 1984 & JP-A-59 087 419

## Description

L'invention se situe dans le domaine des dispositifs de visualisation et en particulier dans le domaine des dispositifs qui permettent de superposer à une première image constituée par exemple par l'image d'un paysage naturel, une seconde image constituée par exemple d'éléments symboliques tels que des symboles géographiques ou d'autres symboles.

La seconde image peut être elle-même une image quelconque ou l'image du paysage lui-même traitée par exemple pour en faire ce que l'on appelle une image infrarouge, c'est-à-dire une image dans laquelle les contrastes sont déterminés par la température des éléments du paysage.

Dans l'état actuel de la technique l'observation d'un paysage se fait avec une longue-vue (marine) ou plus communément avec des jumelles qui sont appréciées pour leur qualité de luminosité.

Un brevet US-4,012,123 divulgue un dispositif binoculaire affichant des données numérisées superposées à un champ de vision.

Le but de la présente invention est de faire apparaître à l'observateur en superposition à l'image observée une seconde image. Cette seconde image peut être une image symbolique tirée d'une carte géographique du lieu observé et faisant apparaître par exemple, les ponts et d'autres éléments remarquables du paysage. En plus de symboles géographiques, il est possible également selon l'invention de faire apparaître d'autres symboles représentant par exemple des positions amies ou ennemies avec une symbologie permettant d'identifier la nature de ces positions (char, nid de mitrailleuse...).

Cette seconde image peut également être une image de synthèse traitée pour apparaître en complément à ce qui est observé, ainsi on pourra sur un paysage dans lequel figure un site archéologique faire apparaître une représentation de l'état du site tel qu'on a pu le reconstituer. De même à un bâtiment en construction on pourra superposer l'image du bâtiment fini.

Cette seconde image peut enfin être l'image du paysage observé après traitement.

Le but cité pour le dispositif selon l'invention est le but poursuivi lorsque l'invention est utilisée en dispositif de visualisation que l'on appellera par analogie avec ce qui se fait en aéronautique "dispositif de visualisation tête haute" c'est-à-dire un dispositif de visualisation dans lequel on superpose à l'image d'une zone géographique une autre image destinée à matérialiser des points des lignes ou des surfaces.

L'invention vise également à permettre l'utilisation du dispositif de visualisation selon l'invention en tête basse. Dans cette utilisation le paysage extérieur n'est plus nécessaire et le dispositif ne sert à visualiser qu'une image générée par exemple par un calculateur et sa mémoire associée. L'image pourra être l'image de la carte géographique du lieu où se trouve l'observateur, ou de zones proches à différentes échelles.

Enfin l'invention vise à satisfaire tous ces buts sous une forme légère et bon marché.

La présente invention a pour objet un dispositif tel que décrit par la revendication 1.

L'invention est donc une lunette d'approche du type longue-vue ou jumelle comprenant dans le boîtier où sont logés l'objectif et l'oculaire et de préférence entre les deux un moyen de visualisation d'une image générée par exemple au moyen d'un calculateur extérieur au dispositif et un moyen de renvoi du type lame semi-transparente permettant de superposer à l'image vue par l'objectif et au même endroit une autre image, celle d'un écran. L'image de l'écran pourra être lumineuse par elle-même par exemple si l'écran est un écran électroluminescent formé à partir d'une poudre électroluminescente connue dans l'art, la poudre étant disposée entre deux lames de verre sur lesquelles court un réseau d'électrodes. La disposition des électrodes détermine les pixels de l'image qui peut être formée. L'intensité lumineuse de chaque pixel est une fonction du champ créé entre les électrodes qui commandent le pixel. Selon la configuration de l'écran, l'image peut être monochrome ou polychrome .

La constitution et la commande de tels écrans est connue par elle-même et ne sera pas décrite plus avant.

L'image de l'écran peut ne pas être lumineuse par elle-même et dans ce cas il faudra lui adjoindre un dispositif d'éclairage. Ce dispositif peut être tout dispositif connu dans l'art et notamment une plaque électroluminescente, une diode, un tube fluorescent ...

Le dispositif de renvoi permet de renvoyer l'image de l'écran sur le trajet optique de la jumelle. Dans sa forme la plus simple, il comporte un seul dispositif de renvoi proprement dit, constitué par une lame semi transparente de préférence escamotable par rotation, de façon à permettre de visionner au choix l'image de l'extérieur et l'image de l'écran en superposition l'une à l'autre, ou l'image de l'extérieur seule.

Dans une forme plus élaborée, le dispositif de renvoi pourra comporter en outre entre l'écran et la lame semi-transparente d'autres dispositifs optiques tels que des lentilles ou des miroirs destinés à ajuster la taille de l'image de l'écran et le chemin optique de l'image de l'écran. L'ensemble de ces dispositifs pourra également être remplacé par un hologramme faisant fonction de miroir et de lentille.

Le dispositif selon l'invention pourra comprendre outre l'écran et le dispositif de renvoi des moyens supplémentaires d'obturation de l'objectif.

Il est dit supplémentaire car les lunettes d'approche comportent en général de façon connue des opercules de protection de l'objectif, couvercle pivotant ou coulissant, qui peuvent être employés comme obturateur.

Avec un obturateur le dispositif selon l'invention est utilisable en tête basse pour visualiser l'image de l'écran seul.

Dans cette configuration le dispositif optique se réduit à une sorte de microscope permettant de visualiser avec une taille raisonnable l'image de l'écran. Ce genre d'obturateur commode pour travailler essentiellement en tête basse peut s'avérer trop rustique pour travailler en tête haute.

Dans ce mode de travail on peut avoir besoin de visualiser en alternance l'image de l'extérieur et l'image de l'écran. Dans ce cas, l'obturateur peut être une lame à cristaux liquides ayant deux faces, chacune des faces comportant une électrode transparente. Selon la tension appliquée les cristaux absorbent plus ou moins la lumière de l'extérieur. Un tel obturateur a un double intérêt, d'une part il permet de travailler en tête basse comme indiqué plus haut mais il permet de plus d'ajuster le niveau de luminosité de l'image extérieure de telle sorte que l'image intérieure, celle de l'écran, et l'image extérieure du paysage n'aient pas des écarts de luminosité trop importants de façon à ce que les deux images soient bien visibles ensemble.

Il a été vu plus haut que la jumelle selon l'invention était équipée d'un écran dont l'état des différents pixels était une fonction de la tension appliquée aux bornes des électrodes commandant chaque pixel.

De préférence, cet état de tension des électrodes sera commandé par un calculateur. Les moyens de réaliser une telle commande à partir de jeux d'instructions, d'éléments d'informations stockés dans une mémoire et de moyens de lecture donnant accès à des dispositifs de stockage d'information tels que des dispositifs magnétiques ou des disques optiques, sont connus en eux-mêmes et ne seront pas décrits plus avant.

Un exemple particulier de réalisation et ses variantes sera maintenant décrit en référence aux dessins annexés dans lesquels :
- la figure 1, représente une vue de dessus d'une coupe schématisée selon un plan horizontal médian d'un canon de jumelle selon l'invention;
- la figure 2, représente une vue schématique de variantes de réalisation;
- la figure 3, représente le canon de lunette de la figure 1;

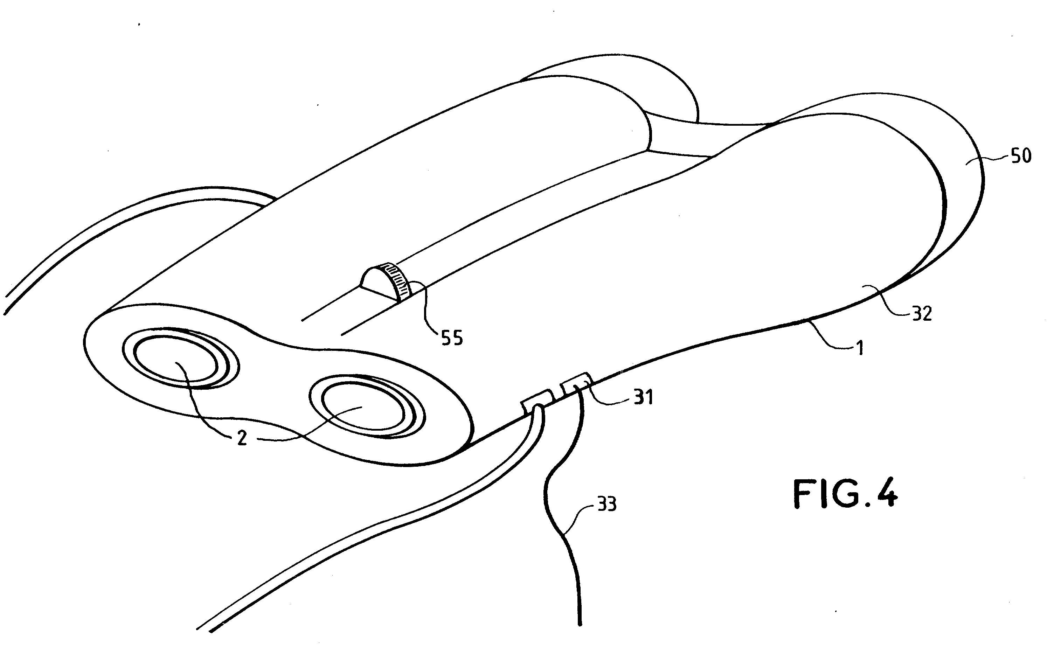

- la figure 4, représente une vue en perspective de la jumelle équipée d'un système de vision de nuit.

Le dispositif selon la réalisation particulière qui va être présentée est une jumelle binoculaire comportant de façon classique deux canons optiques contenant chacun un objectif et un oculaire. Dans la description qui va suivre on ne s'intéressera, en ce qui concerne la partie optique, qu'à l'un des canons, celui qui contient les dispositifs additionnels selon l'invention.

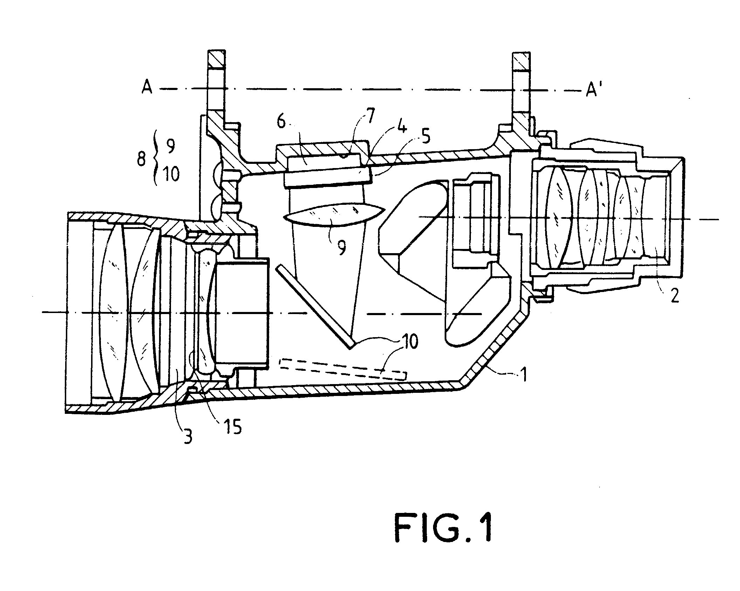

La figure 1 représente une vue de dessus d'une coupe schématisée selon un plan horizontal médian d'un canon de jumelle selon l'invention contenant les moyens de visualisation de la seconde image.

Le canon de jumelle comporte de façon classique un boîtier 1, un oculaire 2 et un objectif 3, l'axe de visée de la jumelle est matérialisé par l'axe AA' qui représente l'axe de symétrie des deux canons de jumelle.

Dans le dispositif particulier représenté le canon comporte de plus, disposé latéralement entre l'oculaire et l'objectif, un dispositif de présentation d'image électronique constitué d'un écran 4 à cristaux liquides de petite taille. La surface totale de l'écran est 24x24 mm². Cette surface permet de disposer de 512x512 points d'images de chacun 30x30 µm². Les bords de l'écran ont une largeur de 3mm utilisée pour les prises de connexion d'un réseau d'électrodes. Ces connexions et une connexion d'éclairage sont reliées à un connecteur 5 permettant le raccordement à un calculateur extérieur éventuellement par l'intermédiaire d'une carte d'interface d'adaptation. L'alimentation électrique est de 3mA sous 5 volts. Le dispositif d'éclairage est constitué d'une plaque électroluminescente 6 de dimensions égales à celles de l'écran et dont l'avantage est la faible épaisseur, de l'ordre du mm, et une sélectivité spectrale adaptable à l'utilisation d'un miroir dichroïque de renvoi 7. La consommation électrique de l'ensemble de l'écran avec son éclairage dans les conditions particulières d'utilisation liées à l'invention et selon les conditions de contraste requises en fonction de la luminosité extérieure est de 0,01 à 2 watts.

Un dispositif optique 8 composé dans ce cas d'une lentille 9 et d'une lame 10 à faces parallèles semi-transparente disposée à 45° par rapport à l'axe optique de l'objectif, permet de superposer l'image de l'écran à l'image vue à travers l'objectif. Dans des variantes de réalisation, la disposition de l'écran et la composition des moyens de renvoi de l'image peuvent être différentes.

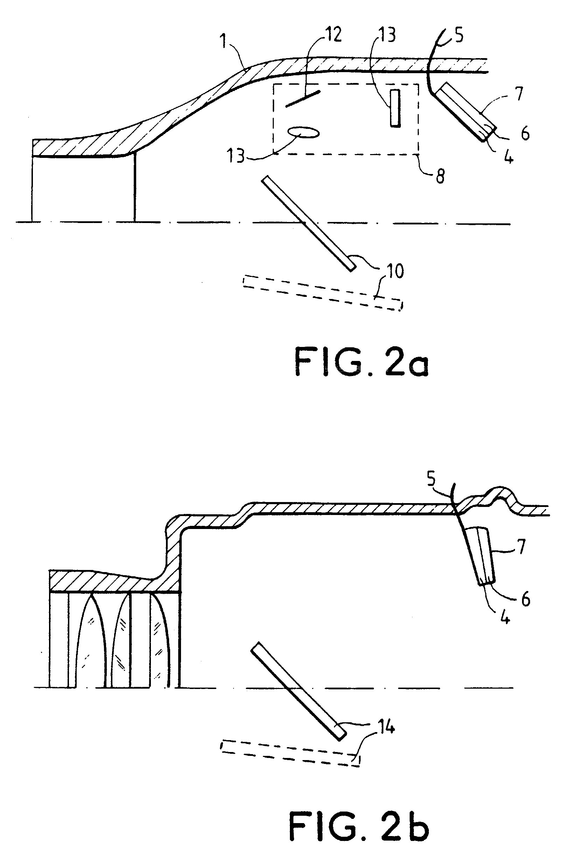

On a représenté figure 2 une vue schématique de variantes de réalisation, l'une (figure 2a) dans laquelle pour disposer d'un chemin optique plus long entre l'écran 4 et a lame de renvoi 10, l'écran 4 est disposé différemment.

Le dispositif optique 8 de renvoi comporte dans ce cas un miroir de renvoi 12 et une ou plusieurs lentilles 13.

Dans l'autre variante de réalisation (figure 2b) le dispositif de renvoi 8 et la lame semi-transparente 10 sont remplacés par un hologramme ayant des fonctions de focalisation et de miroir. Cet hologramme 14 est mis à la place de la lame 10.

Dans toutes les variantes de réalisation la lame 10 ou l'hologramme 14 peuvent être escamotables par exemple par rotation. La position escamotée est représentée en pointillés.

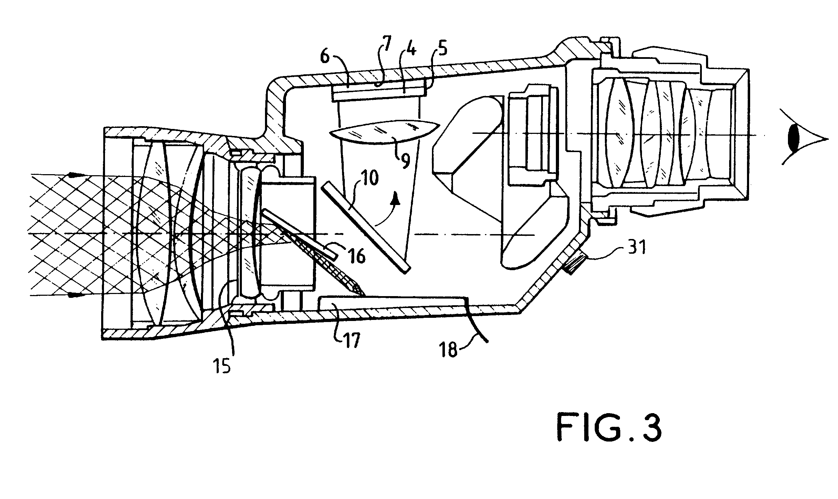

La figure 3 représente le canon de lunette de la figure 1 selon la même coupe mais l'on a représenté des éléments additionnels qui seront ci-après décrits. Les éléments additionnels comportent un atténuateur de transmission optique variable 15.

Cet atténuateur 15 connu par lui-même est un ensemble de deux lames transparentes entre lesquelles est inséré un cristal liquide à molécules dichroïques chirales. Selon l'orientation des molécules commandée par des électrodes transparentes disposées sur les lames, la lame laisse plus ou moins passer la lumière. La transmission peut varier de quasi totale à quasi nulle.

Le boîtier de la jumelle comporte immédiatement après l'objectif une lame semi-transparente escamotable 16, cette lame a pour fonction d'envoyer l'image vers un réseau matriciel de détecteurs 17.

Dans le mode particulier de réalisation le rôle de la lame est joué par la lame 10 qui a ainsi une double fonction.

Ce réseau peut être sensible à la lumière visible ou de préférence au rayonnement infrarouge. Les valeurs d'éclairement tirées de cette matrice peuvent être envoyées vers un calculateur par une liaison 18. Après traitement l'image donnée par le réseau de capteurs 17 peut être renvoyée vers l'écran 4 par des moyens de raccordement de cet écran à un calculateur.

L'ensemble des liaisons vers un calculateur qui, dans le cas de la réalisation, est à l'extérieur de la lunette, est relié au niveau de la jumelle sur une prise de connexion 31. Cette prise reçoit donc les liaisons 5, 18.

La description de la lunette jumelle ci-dessus ne fait pas état de tous les modules additionnels ou optionnels qu'il est possible d'ajouter et qui élargissent le champ d'utilisation. On citera à titre d'exemple l'addition, pour la vision de nuit, d'un module optionnel 50 amplificateur de lumière représenté figure 5. Cette figure représente en perspective le dispositif de visualisation 32 selon l'invention. Elle fait également apparaître un moyen de réglage 55 de la netteté, la prise de raccordement 31 et une liaison 33 vers un calculateur.

## Revendications

1. Dispositif de visualisation (32) comportant :
- un boîtier (1) logeant des moyens optiques comportant un objectif (3), un oculaire (2), ces moyens permettant la vision selon un axe dit axe optique (AA'), des moyens de réglage de la netteté (55) accessibles à l'extérieur du boîtier, les moyens optiques permettant la formation d'une image à partir d'un champ de vision pouvant comprendre tout ou partie d'une zone déterminée par l'axe optique et un angle dit angle d'ouverture des moyens optiques et comportant, logés à l'intérieur du boîtier (1):
- des moyens de visualisation (4, 6, 7) d'une image lumineuse formée à partir de pixels commandables par un calculateur,
- au moins un composant optique de renvoi (8) permettant de superposer à l'image du champ de vision l'image des moyens de visualisation (4, 6, 7) et, à l'extérieur du boîtier 1, au moins une liaison (5) permettant le raccordement des moyens de visualisation à un calculateur, caractérisé en ce que le dispositif de renvoi (8) est constitué d'un hologramme (14) ayant une fonction de miroir et une fonction de focalisation.

2. Dispositif selon la revendication 1, caractérisé en ce que le moyen de génération d'une image lumineuse est constitué d'un écran électroluminescent (4).

3. Dispositif selon la revendication 1, caractérisé en ce que le moyen de génération d'une image lumineuse est constitué d'un écran à cristaux liquides (4) éclairé par des moyens d'éclairage (6, 7).

4. Dispositif selon la revendication 3, caractérisé en ce que les moyens d'éclairage sont constitués par une plaque électroluminescente (6) et un miroir de renvoi (7).

5. Dispositif selon la revendication 1, caractérisé en ce que le dispositif de renvoi d'image (8) est constitué par au moins une lentille (9) et une lame semi-transparente (10).

6. Dispositif selon la revendication 1, caractérisé en ce que le dispositif de renvoi comporte au moins une lentille (13), un miroir (12) et une lame semi-transparente (10).

7. Dispositif selon la revendication 1, caractérisé en ce que l'objectif (3) comporte un atténuateur (15) électriquement commandable.

8. Dispositif selon la revendication 7, caractérisé en ce que l'atténuateur (15) est constitué par un cristal liquide maintenu entre deux lames minces transparentes sur lesquelles sont fixées des électrodes.

9. Dispositif selon l'une des revendications 1 à 8, caractérisé en ce qu'il comporte en outre, placé derrière l'objectif, une lame semi-transparente (16) renvoyant l'image vue par l'objectif vers un réseau de capteurs (17).

10. Dispositif selon la revendication 9, caractérisé en ce que les capteurs (17) sont des capteurs infrarouge.

11. Dispositif selon l'une des revendications 1 à 10, caractérisé en ce qu'il comporte une prise de raccordement (31) à un calculateur.

## Patentansprüche

1. Sichtvorrichtung (32) mit:
- einem Gehäuse (1), das optische Mittel aufnimmt, die ein Objektiv (3) und ein Okular (2) enthalten, wobei diese Mittel das Sehen entlang einer Achse ermöglichen, die optische Achse (A-A') genannt wird, sowie Mittel (55) zur Einstellung der Schärfe, die von außerhalb des Gehäuses zugänglich sind, wobei die optischen Mittel das Erzeugen eines Bildes ausgehend von einem Sehfeld ermöglichen, das einen Bereich, der von der optischen Achse und einem Öffnungswinkel der optischen Mittel genannten Winkel gebildet ist, vollständig oder teilweise enthalten kann, sowie, aufgenommen im Inneren des Gehäuses (1), mit:
- Mitteln (4, 6, 7) zur Sichtbarmachung eines leuchtenden Bildes, das ausgehend von Pixeln gebildet ist, die von einem Rechner gesteuert werden können,
- wenigstens einem optischen Umlenk-Bauteil (8), welches ermöglicht, dem Bild des Sehfeldes das Bild der Mittel (4, 6, 7) zur Sichtbarmachung zu überlagern, sowie wenigstens einer Verbindung (5) außerhalb des Gehäuses (1), welche das Anschließen der Mittel zur Sichtbarmachung an einen Rechner ermöglicht, dadurch gekennzeichnet, daß die Umlenk-Vorrichtung (8) aus einem Hologramm (14) besteht, das die Funktion eines Spiegels sowie eine Fokussierungsfunktion hat.

2. Vorrichtung nach Anspruch 1, dadurch gekennzeichnet, daß das Mittel zur Erzeugung eines leuchtenden Bildes durch einen elektrolumineszierenden Bildschirm (4) gebildet ist.

3. Vorrichtung nach Anspruch 1, dadurch gekennzeichnet, daß das Mittel zur Erzeugung eines leuchtenden Bildes durch einen Flüssigkristall-Bildschirm (4) gebildet ist, der von Beleuchtungsmitteln (6, 7) beleuchtet wird.

4. Vorrichtung nach Anspruch 3, dadurch gekennzeichnet, daß die Beleuchtungsmittel durch eine elektrolumineszierende Platte (6) und einen Umlenkspiegel (7) gebildet sind.

5. Vorrichtung nach Anspruch 1, dadurch gekennzeichnet, daß die Vorrichtung (8) zur Bildumlenkung durch wenigstens eine Linse (9) und ein halbdurchlässiges Plättchen (10) gebildet ist.

6. Vorrichtung nach Anspruch 1, dadurch gekennzeichnet, daß die Umlenkvorrichtung wenigstens eine Linse (13), einen Spiegel (12) und ein halbdurchlässiges Plättchen (10) enthält.

7. Vorrichtung nach Anspruch 1, dadurch gekennzeichnet, daß das Objektiv (3) eine elektrisch steuerbare Dämpfungsvorrichtung (15) aufweist.

8. Vorrichtung nach Anspruch 7, dadurch gekennzeichnet, daß die Dämpfungsvorrichtung (15) durch einen Flüssigkristall gebildet ist, der zwischen zwei dünnen transparenten Plättchen gehalten ist, an denen Elektroden befestigt sind.

9. Vorrichtung nach einem der Ansprüche 1 bis 8, dadurch gekennzeichnet, daß sie außerdem hinter dem Objektiv angeordnet ein halbdurchlässiges Plättchen (16) aufweist, das ein vom Objektiv gesehenes Bild zu einem Feld von Aufnehmern (17) umlenkt.

10. Vorrichtung nach Anspruch 9, dadurch gekennzeichnet, daß die Aufnehmer (17) Infrarotaufnehmer sind.

11. Vorrichtung nach einem der Ansprüche 1 bis 10, dadurch gekennzeichnet, daß sie ein Steckverbindungsteil (31) zum Anschluß an einen Rechner aufweist.

## Claims

1. Display device (32) which includes:
- a housing (1) which houses optical means, including an objective (3) and an eyepiece (2), these means allowing vision along an axis called the optical axis (AA'), means (55) for adjusting the sharpness which are accessable on the outside of the housing, the optical means allowing the formation of an image from a field of view able to comprise all or part of a region defined by the optical axis and an angle called the aperture angle of the optical means
and which includes, housed inside the housing (1):
- means (4, 6, 7) for displaying a light image formed from pixels which are able to be controlled by a computer,
- at least one optical deflection component (8) enabling the image of the display means (4, 6, 7) to be superimposed on the image of the field of view and, outside the housing, at least one link (5) enabling the display means to be connected to a computer, characterized in that the deflection device (8) consists of a hologram (14) which has a mirror function and a focusing function.

2. Device according to Claim 1, characterized in that the means for generating a light image consists of an electroluminescent screen (4).

3. Device according to Claim 1, characterized in that the means for generating a light image consists of a liquid-crystal screen (4) illuminated by illumination means (6, 7).

4. Device according to Claim 3, characterized in that the illumination means consist of an electroluminescent plate (6) and a deflection mirror (7).

5. Device according to Claim 1, characterized in that the image-deflecting device (8) consists of at least one lens (9) and a semi-transparent plate (10).

6. Device according to Claim 1, characterized in that the deflection device includes at least one lens (13), a mirror (12) and a semi-transparent plate (10).

7. Device according to Claim 1, characterized in that the objective (3) includes an electrically controllable attenuator (15).

8. Device according to Claim 7, characterized in that the attenuator (15) consists of a liquid crystal held in place between two thin transparent plates to which electrodes are fixed.

9. Device according to one of Claims 1 to 8, characterized in that it furthermore includes, placed behind the objective, a semi-transparent plate (16) which sends the image seen by the objective back to an array of sensors (17).

10. Device according to Claim 9, characterized in that the sensors (17) are infrared sensors.

11. Device according to one of Claims 1 to 10, characterized in that it includes a socket (31) for connection to a computer.
